# EUROPEAN PATENT APPLICATION

(11) **EP 1 791 280 A2**
(43) Date of publication of application: **30.05.2007**
(21) Application number: 06024654.3
(22) Date of filing: 28.11.2006
(51) Int. Cl.: H04H 1/00

(54) **Method and apparatus for transmitting/receiving electronic service guides of different versions in a digital broadcasting system**

(30) Priority: 28.11.2005 KR 20050114443; 13.12.2005 KR 20050122714
(71) Applicant: Samsung Electronics Co., Ltd., Suwon-si, Gyeonggi-Do (KR)
(72) Inventor: Lee, Hye-Young, Yeongtong-gu Suwon-si Gyeonggi-do (KR); Song, Jae-Yeon, Yeongtong-gu Suwon-si Gyeonggi-do (KR); Lee, Kook-Heui, Yeongtong-gu Suwon-si Gyeonggi-do (KR)
(74) Representative: Grünecker, Kinkeldey, Stockmair & Schwanhäusser Anwaltssozietät

(57) **Abstract**

A method and apparatus for encoding additional ESG information and decoding a new version of an Electronic Service Guide (ESG) in a terminal, when information for the new version ESG is transmitted by a digital video broadcasting system. When an information field is added in relation to a fragment of an old version to construct the new version ESG, an independent fragment of the new version for the information field is added without modifying the old version fragment. A connection relation for the reference to an associated old version fragment is specified within the new version fragment.

## Description

### BACKGROUND OF THE INVENTION

### 1. Field of the Invention

The present invention generally relates to a digital broadcasting system, and more particularly to a method and apparatus for encoding information for an Electronic Service Guide (ESG) within elements of different fragments on the basis of version information of an ESG standard.

### 2. Description of the Related Art

Transmission technologies for digital broadcasting are provided for various broadcasting systems such as Digital Audio Broadcasting (DAB), Digital Video Broadcasting (DVB), Digital Multimedia Broadcasting (DMB), etc. For example, the DVB system is a transmission standard for supporting digital multimedia services for handheld and mobile terminals as well as existing digital broadcasting with European digital broadcasting technologies.

The DVB system can simultaneously transmit Moving Picture Experts Group-2 (MPEG2) Transport Stream (TS)-based broadcasting data and Internet Protocol (IP)-based data streams by multiplexing them. Further, the DVB system can multiplex and transmit various services in one IP stream. After receiving data of the transmitted IP stream, a terminal demultiplexes the received data into individual services, decodes a TS of a desired service, and provides a user with the decoded TS on a display. At this time, the user requires information about various services and service content provided from the DVB system.

The DVB system uses an Electronic Service Guide (ESG) to provide notification of service information. ESG data includes time information for particular service, associated content information, information required to receive content, information required to purchase content, etc. The DVB system constructs a data model for efficiently transmitting the ESG data and sets information to be transmitted on the basis of the data model.

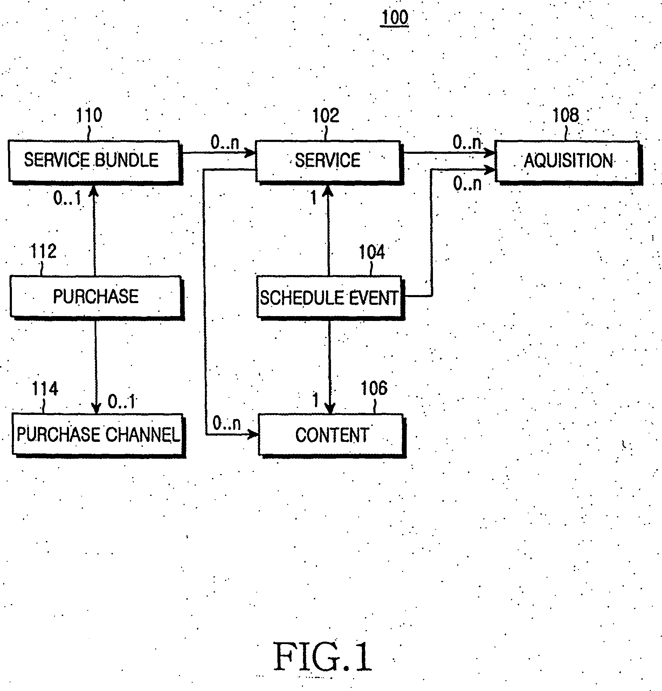

FIG 1 is a block diagram illustrating a conventional structured ESG data model.

As illustrated in FIG. 1, blocks 112-114 represent fragments of ESG data. That is, the ESG data model 100 is provided with a service fragment 102, a schedule event fragment 104, a content fragment 106, an acquisition fragment 108, a service bundle fragment 110, a purchase fragment 112, and a purchase channel fragment 114.

The service fragment 102 contains a description of the overall service. The schedule event fragment 104 specifies service information according to time. The acquisition fragment 108 contains information to be signaled to receive actual data. The service bundle fragment 110 contains information about one service bundle in which multiple services are tied together. The purchase fragment 112 specifies price information for purchasing the service bundle. The purchase channel fragment 114 specifies information about a system to be used to acquire the right for purchase.

Fragments of the data model contain the references to other fragments and the lines with arrows that connect the blocks indicate the reference relationships. The reference relationships are used to provide information related to each corresponding fragment using information to be transmitted in a different fragment. For example, when one service includes multiple content elements, the service fragment 102 only contains a description of the overall service, for example, a service name, service language, etc. The content to be transmitted through the service is described in the content fragment 106 referenced in the service fragment 102. Various information required to receive the service in the terminal, for example, session information used in a provided protocol, can be acquired by receiving and decoding the acquisition fragment 108 referenced in the service fragment 102.

Every fragment of FIG. 1 has an associated fragment identifier (ID) as a unique attribute. That is, the service fragment 102 has service ID. The schedule event fragment 104 has schedule ID. The content fragment 106 has content ID. The acquisition fragment 108 has acquisition ID. The service bundle fragment 110 has service Bundle ID. The purchase fragment 112 has purchase ID. The purchase channel fragment 114 has purchase Channel ID. The IDs are used when related fragments are referenced in a different fragment.

The fragment ID is an important parameter representing connectivity with other fragments in the reference relationship. Thus, the fragments in the reference relationship should contain IDs of other fragments with the references. For example, when the service fragment 102 refers to specific content, the content fragment 106 specifies an ID of the service fragment 102. To specify the service fragment 102, the content fragment 106 contains an element field for specifying a service ID. One or more fields for specifying an ID for the reference can be contained within each fragment, if needed. When one or more fragments for making the reference are present, one or more elements with a special name are declared and references can be independently made using the elements on a fragment-by-fragment basis.

Table 1 illustrates a service fragment syntax corresponding to the service fragment 102 of ESG data in the DVB system.

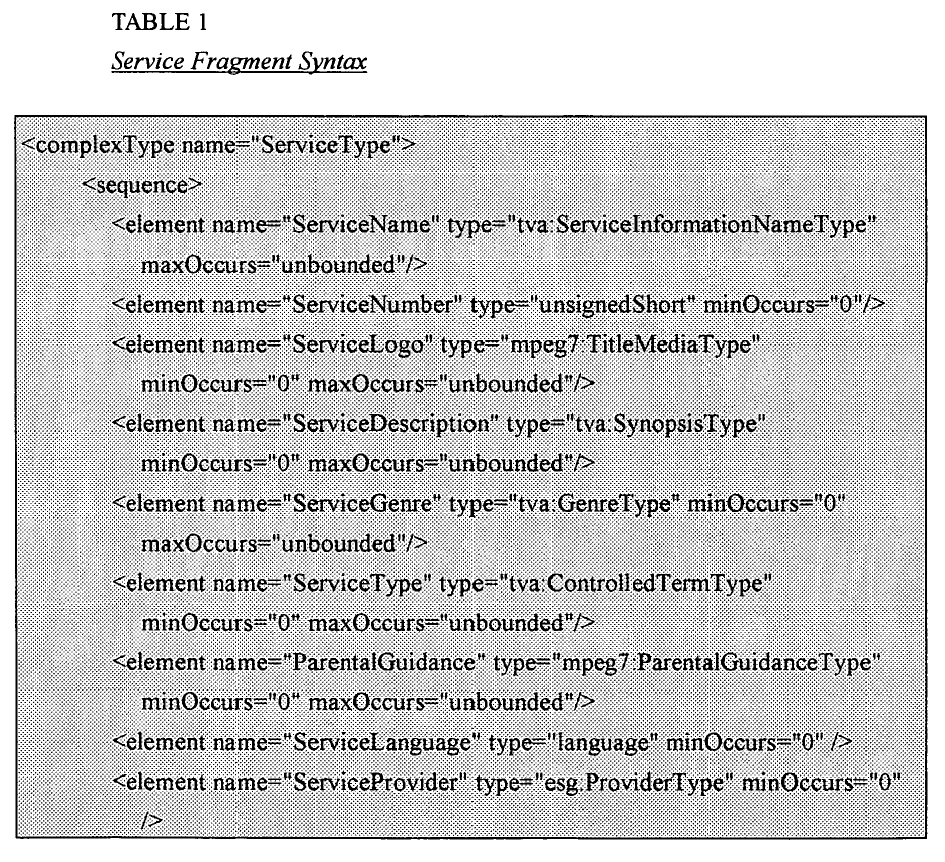

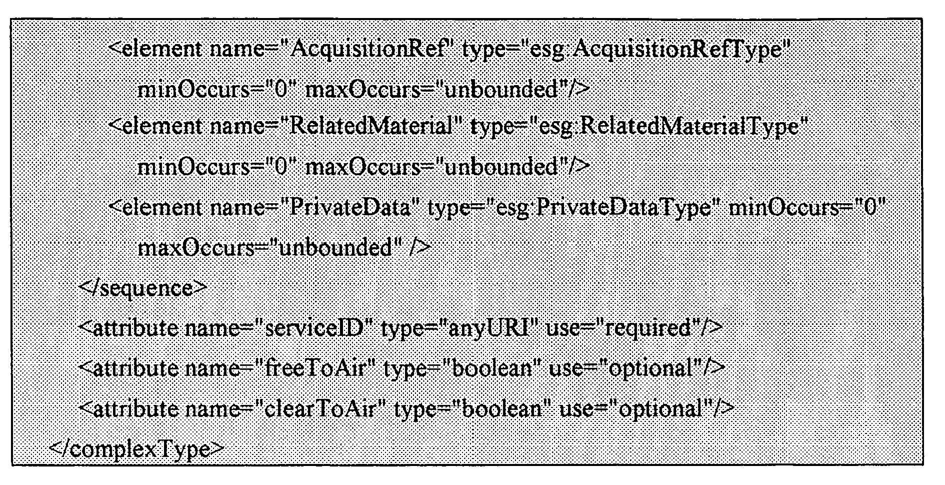

The service fragment 102 is declared with the "ServiceType" field of the service fragment syntax. The "ServiceType" field has lower attributes of "serviceID", "freeToAir" and "clearToAir". In the service fragment syntax, the "serviceID" field is a field uniquely declared to distinguish the service fragment 102 from other fragments and has unique values for the service fragment 102. The "freeToAir" field specifies whether a service of the service fragment 102 is available for free. The "clearToAir" field specifies whether service data is scrambled and transmitted with an encryption key upon transmission of the service data. The "ServiceType" field has the following lower elements.

The "ServiceName" field specifies a name of the service. The "ServiceNumber" field specifies a number assigned to the service. The number is a unique value defined by a service provider. The "ServiceGenre" field specifies a genre of the service. The "ServiceType" field specifies a type of the service. The "ParentalGuidance" field specifies a parental rating of the service. The "ServiceLanguage" field specifies a language of the service. The "ServiceProvider" field specifies a provider of the service. The "AcquisitionRef" field specifies an ID of the acquisition fragment 108 in which required information is transmitted for a service reception. The terminal identifies the acquisition fragment 108 referenced in the service fragment 102 from the ID contained in the "AcquisitionRef" field, and decodes the acquisition fragment 108 with the ID to acquire related information. The "RelatedMaterial" field specifies additional media information about the service. The "PrivateData" field is declared to enable the service provider to transmit any type of data in the service fragment 102.

Both the ESG data and the service fragment 102 are transmitted to the terminal using an IP stream at a time different from that of an actual data stream. Thus, the service provider can transmit information to be known using the ESG data before the user receives an actual service. The ESG data can be used for various purposes as well as a program guide.

The ESG data fragments, the data model structure and the fragment fields can differ according to version of a standard of the ESG data. In this case, an ESG should be constructed such that the terminal can basically ensure backward compatibility in decoding the ESG data. That is, an ESG of a new version should be constructed such that terminals manufactured in a new version ESG standard can decode all of the ESG data model, the fragment structure and the fragment fields of an old version. Further, when receiving the new version ESG, terminals manufactured in an old version ESG standard should be able to successfully decode at least information mapped to the old version. When an old version terminal decodes the new version ESG, an obstacle or inefficiency in its decoding operation should not occur due to the addition of a new fragment or field.

### SUMMARY OF THE INVENTION

Therefore, the present invention provides a method and apparatus for constructing an Electronic Service Guide (ESG) data model that can effectively decode an ESG of a new version while maintaining backward compatibility when an ESG version is upgraded in a digital broadcasting system.

Moreover, the present invention provides a method and apparatus for transmitting/receiving an ESG that can maintain backward compatibility when an ESG version is upgraded in a digital broadcasting system for providing the ESG

In accordance with an aspect of the present invention, there is provided a method for transmitting Electronic Service Guides (ESGs) of different versions in a digital broadcasting system, the method including receiving new information to be added to ESG data of an old version having at least one of a service fragment, a schedule event fragment, a content fragment, an acquisition fragment, a service bundle fragment, a purchase fragment, and a purchase channel fragment corresponding to old version fragments, encoding the new information and inserting the encoded new information into a new version fragment distinguished from the old version fragments, inserting a reference field for indicating an old version fragment related to the new information into the new version fragment, and transmitting ESG data of a new version having the new and old version fragments to receiving terminals through multiple Internet Protocol (IP) streams.

In accordance with another aspect of the present invention, there is provided a method for receiving Electronic Service Guides (ESGs) of different versions in a digital broadcasting system, the method including receiving ESG data having at least one of a service fragment, a schedule event fragment, a content fragment, an acquisition fragment, a service bundle fragment, a purchase fragment, and a purchase channel fragment corresponding to old version fragments and at least one new version fragment, dividing the ESG data into the old version fragments and the at least one new version fragment, decoding the old version fragments, determining whether the at least one new version fragment can be decoded by referring to a decodable fragment list skipping the at least one new version fragment if it is determined that the at least one new version fragment cannot be decoded and decoding the at least one new version fragment only when it is determined that the at least one new version fragment can be decoded.

In accordance with another aspect of the present invention, there is provided an apparatus for transmitting Electronic Service Guides (ESGs) of different versions in a digital broadcasting system, the apparatus including an old version fragment encoder for generating ESG data of an old version having at least one of a service fragment, a schedule event fragment, a content fragment, an acquisition fragment, a service bundle fragment, a purchase fragment, and a purchase channel fragment corresponding to old version fragments, a new version fragment encoder for receiving new information to be added to the old version ESG data, encoding the new information, inserting the encoded new information into a new version fragment distinguished from the old version fragments, and inserting a reference field for indicating an old version fragment related to the new information into the new version fragment, and a transmitter for transmitting ESG data of the new version having the new and old version fragments to receiving terminals through multiple Internet Protocol (IP) streams.

In accordance with yet another aspect of the present invention, there is provided an apparatus for receiving Electronic Service Guides (ESGs) of different versions in a digital broadcasting system, the apparatus including a receiver for receiving ESG data having at least one of a service fragment, a schedule event fragment, a content fragment, an acquisition fragment, a service bundle fragment, a purchase fragment, a purchase channel fragment corresponding to old version fragments and at least one new version fragment,
an old version fragment decoder for decoding the old version fragments of the ESG data and a new version fragment decoder for determining whether the at least one new version fragment can be decoded by referring to a preset decodable fragment list, skipping the at least one new version fragment when is determined that the at least one new version fragment cannot be decoded, and decoding the at least one new version fragment when it is determined that the at least one new version fragment can be decoded.

### BRIEF DESCRIPTION OF THE DRAWINGS

The above and other features and advantages of the present invention will be more clearly understood from the following detailed description taken in conjunction with the accompanying drawings, in which:
FIG. 1 is a block diagram illustrating a conventional structured Electronic Service Guide (ESG) data model;
FIG. 2 is a flowchart illustrating a method for transmission in accordance with the present invention;
FIG. 3 is a flowchart illustrating a method for reception in accordance with the present invention;
FIG. 4 is a flowchart illustrating a method for transmission according to the present invention;
FIG. 5 is a flowchart illustrating a method for reception in accordance with the present invention;
FIG. 6 is a flowchart illustrating a method for transmission in accordance with the present invention;
FIG. 7 is a flowchart illustrating a method for reception in accordance with the present invention;
FIG. 8 is a flowchart illustrating a method for transmission in accordance with the present invention;
FIG. 9 is a flowchart illustrating a method for reception in accordance with the present invention;
FIG. 10 is a block diagram illustrating a transmitter in accordance with the present invention;
FIG. 11 is a block diagram illustrating a receiver in accordance with the present invention;
FIG. 12 is a diagram illustrating a structure of an ESG initialization container in accordance with the present invention;
FIG. 13 is a flowchart illustrating an operation of a transmitter in accordance with the present invention;
FIG. 14 is a flowchart illustrating an operation of a receiver in accordance with the present invention;
FIG. 15 is a block diagram illustrating a structure of a transmitter for transmitting ESG data with signaling information in accordance with the present invention; and
FIG. 16 is a block diagram illustrating a structure of a receiver for receiving ESG data with signaling information in accordance with the present invention.

### DETAILED DESCRIPTION OF THE PREFERRED EMBODIMENTS

Preferred embodiments of the present invention will be described in detail herein below with reference to the accompanying drawings. In the following description, detailed descriptions of functions and configurations incorporated herein that are well known to those skilled in the art are omitted for clarity and conciseness. It is to be understood that the phraseology and terminology employed herein are for the purpose of description and should not be regarded as limiting the present invention.

The present invention defines an independent fragment of a new version (hereinafter, referred to as a new fragment) for an information field without modifying a fragment of an old version (hereinafter, referred to as an old fragment) when the information field is to be added in relation to the old version fragment to construct an Electronic Service Guide (ESG) of the new version. That is, the connection relationship is specified for the reference to an associated old fragment within the new fragment after the information field is added to the new fragment. The new version ESG includes the new fragment in addition to a service fragment, a schedule event fragment, a content fragment, an acquisition fragment, a service bundle fragment, a purchase fragment and a purchase channel fragment corresponding to old fragments.

A terminal capable of supporting the new version ESG receives the new version ESG including the old fragments, decodes all the old and new fragments, and completely interprets the new version ESG. Further, an old terminal incapable of supporting the new version ESG skips the new fragment of the new version ESG and receives and decodes only the old fragments.

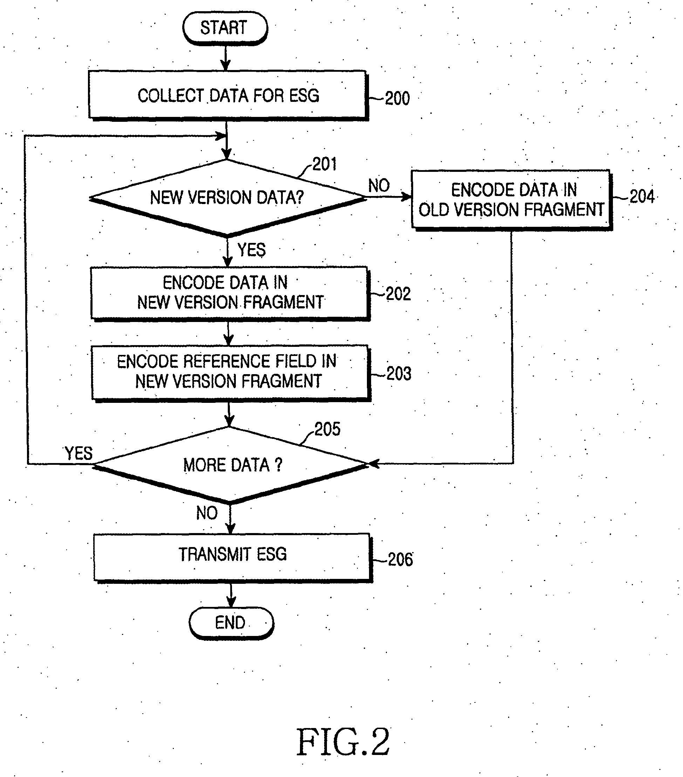

FIG. 2 is a flowchart illustrating a method for transmission in accordance with the present invention. FIG. 2 illustrates an operation of a transmitter, particularly an operation of a section for generating ESG data.

Referring to FIG. 2, the transmitter collects data for generating the ESG in step 200 and determines whether the collected data conforms to an ESG standard of a new version in step 201. If the data is ESG data of an old version rather than that of the new version, the transmitter encodes the collected data and inserts the encoded collected data into an associated fragment of the old version in step 204 and then proceeds to step 205. However, if the data conforms to the new version standard, the transmitter encodes the collected data, inserts the encoded collected data into a new fragment in step 202, and inserts a reference field for specifying the connection relationship with an old fragment referenced in the new fragment through an encoding process in step 203, and then proceeds to step 205. In step 205, the transmitter determines whether data to be encoded remains. If it is determined that there is more data to be encoded, the transmitter returns to step 201. However, if it is determined that all the data has been encoded, the transmitter proceeds to step 206 to transmit ESG data including fragments generated through the encoding process to receiving terminals.

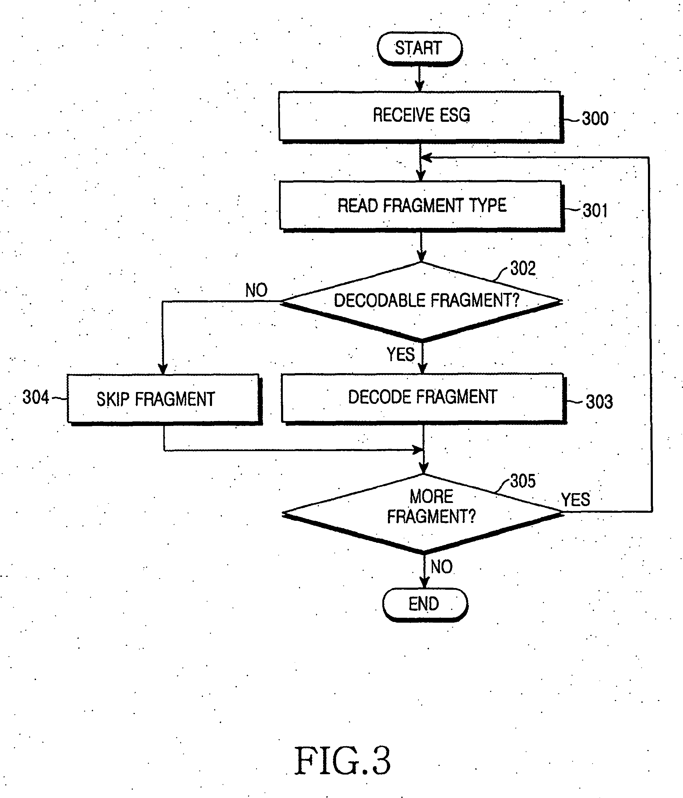

FIG. 3 is a flowchart illustrating a method for reception in accordance with the present invention.

Referring to FIG. 3, a receiving terminal receives ESG data in step 300 and then reads a type of each fragment included in the received ESG data in step 301. In detail, the receiving terminal reads the fragment type through a fragment ID included in one of the fragments included in the received ESG After reading the fragment type, the terminal refers to a list of IDs of decodable fragments (hereinafter, a decodable fragment list) according to its version and determines whether the received fragment ID is mapped to a decodable fragment in step 302. For this, the terminal stores the decodable fragment list upon manufacturing or upgrading software.

If the fragment is determined to be the decodable fragment, that is, a fragment ID within the fragment is contained in the decodable fragment list, the terminal decodes the fragment in step 303. However, if the fragment ID within the fragment is not contained in the decodable fragment list, the fragment is skipped in step 304. Then, the terminal determines whether there are any more fragments to be decoded in the ESG data. If it is determined that there are more fragments to be decoded in the ESG data, the terminal returns to step 301. Otherwise, the receiving terminal ends the operation.

Because old version terminals for supporting the old version ESG do not have a fragment ID added to the new version ESG within the decodable fragment list, they can decode only known fragments, i.e., old fragments. However, because new version terminals for supporting the new version ESG have fragment IDs mapped to all types of fragments within the decodable fragment list, they can decode all the fragments included in the new version ESG data, i.e., old and new fragments.

The method as illustrated in FIG. 3 can decode only received fragments regardless of the terminals version (i.e., old or new). An operation of the terminal after receiving each fragment of ESG data in accordance with the present invention will be described in detail below. The operation of the old version terminal and the operation of the new version terminal will be separately described. A fragment decodable in both the old version terminal and the new version terminal is referred to as an old fragment. A fragment decodable in only the new version terminal is referred to as a new fragment. For convenience of explanation, the old fragment is first decoded. However, the order of decoding according to the fragment's version is not limited to this order. For example, a new fragment may be decoded first and fragments may be decoded in the order that they are received.

When information of a new version is added to ESG data in accordance with the present invention, the additional information is independently defined in the new fragment. An operation and a block diagram will be described when the connection relationship between the new fragment and the old fragment is specified within the new fragment. A first case assumes a "TOKEN" field is contained in a new purchase fragment of ESG data. A second case assumes that "live", "repeat", "ClearToAir" and "FreeToAir" fields are contained in a new schedule event fragment of the ESG data. A third case assumes a field for specifying a pre-paid or post-paid charging type is contained in a new purchase fragment of the ESG data. These cases are applied independently or in combination. These cases will now be described in detail below.

In the first case, the new purchase fragment contains a field for specifying new price information in a TOKEN unit capable of being defined by a service provider in addition to the purchase fragment containing price information of, for example, a currency such as of the South Korean Won, U.S. Dollar, Euro, and so on. The "TOKEN" can be defined as various virtual currencies such as cyber money or mileages of service providers. The terminal can purchase a desired service by acquiring price information as well as the general currency information using various means.

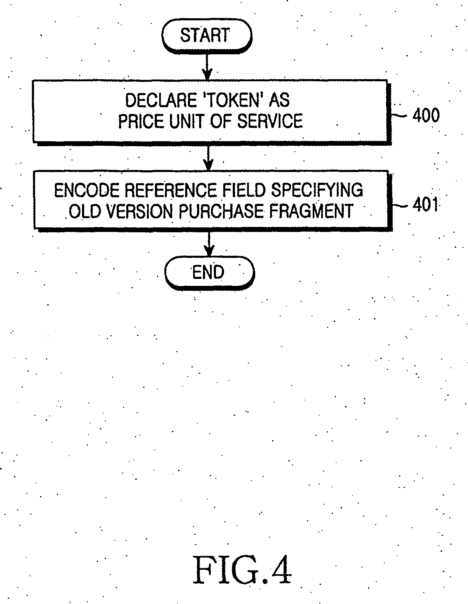

FIG. 4 is a flowchart illustrating the transmission operation in accordance with the first case of the present invention. FIG. 4 illustrates in detail steps 202 and 203 of FIG. 2.

Referring to FIG. 4, the transmitter declares "TOKEN" as a price unit of a service or content, and inserts the "TOKEN" field into the new purchase fragment through an encoding process in step 400. Then, the transmitter indicates that a purchase fragment of an old version is referenced in the new purchase fragment by inserting a reference field indicating that the "TOKEN" field contains the reference to the old purchase fragment into the new purchase fragment through the encoding process in step 401.

An example of a new purchase fragment using an Extensible Markup Language (XML) syntax is shown in Table 2 below. In Table 2, a "PurchaseType2" field includes a "PurchaseRef" field for containing the reference to the old version purchase fragment and a "TokenPrice" field for specifying "TOKEN" of a new price unit. For example, a name of a new field in which the "TOKEN" information is transmitted is "TokenPrice" and its type can be set to every type in which the "TOKEN" information can be transmitted.

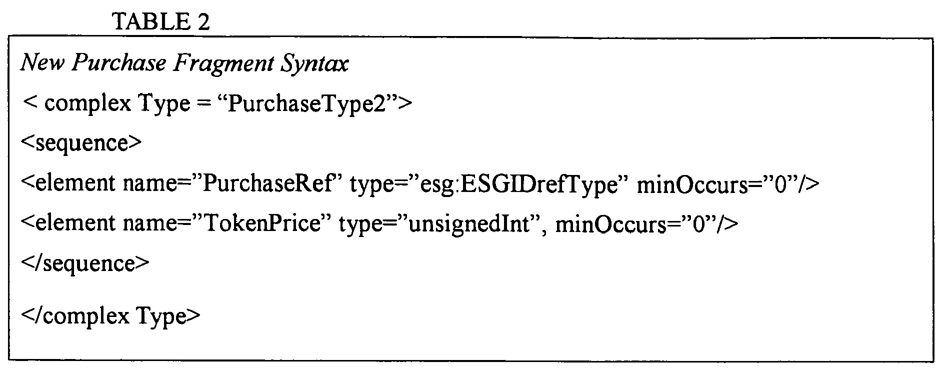

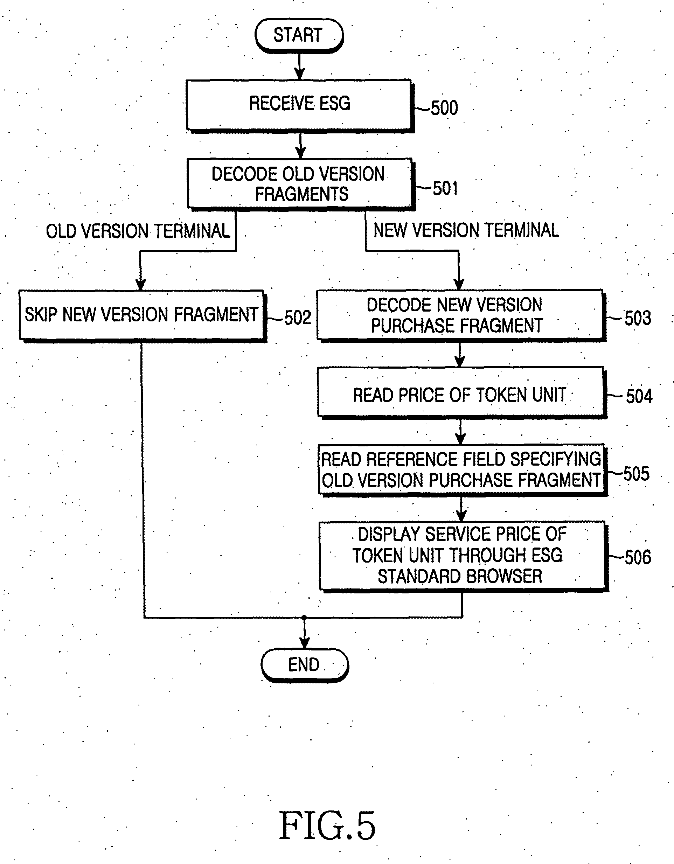

FIG. 5 is a flowchart illustrating a method for reception in accordance with the first case of the present invention.

Referring to FIG. 5, a terminal receives ESG data in step 500 and decodes old fragments among fragments included in the ESG data in step 501. If a decodable fragment list of the terminal does not contain a new fragment, particularly a new purchase fragment, the terminal is supportable an ESG data standard of an old version and go to step 502. In step 502, the terminal skips the new purchase fragment included in the received ESG data.

However, if the new purchase fragment included in the ESG data is contained in the decodable fragment list of the terminal, the terminal decodes the new purchase fragment in step 503 and then reads information about a price unit of the "TOKEN" from the new purchase fragment in step 504. In step 505, the terminal reads the new purchase fragment and an old fragment with the reference relationship among the old fragments decoded in step 501. In step 506, the terminal stores and displays service price information of the "TOKEN" unit through an ESG standard browser using the price unit information and the old fragment with the reference relationship. At this time, information acquired by decoding referenced old fragments can be displayed.

In the second case, fields for indicating characteristics of specific content are added to the new schedule event fragment within the ESG

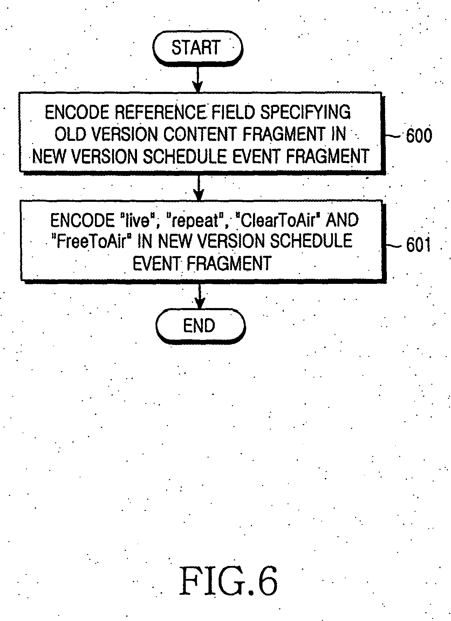

FIG. 6 is a flowchart illustrating a method for transmission in accordance with the second case of the present invention. FIG. 6 illustrates in detail steps 202 and 203 of FIG. 2..

Referring to FIG. 6, the transmitter encodes a reference field for indicating an old content fragment and inserts the encoded reference field into the new schedule event fragment in step 600. The transmitter includes "live", "repeat", "ClearToAir" and "FreeToAir" fields and so on for indicating the characteristics of the specific content in the new schedule event fragment. Herein, the "live" field indicates a live broadcast, the "repeat" field indicates a repeat of a previous broadcast, the "clearToAir" field specifies that the content is not scrambled, and the "freeToAir" field specifies that the content is available for free. Other fields for indicating content types can be added.

An example of XML syntax of the new schedule event fragment is shown in Table 3 below as follows.

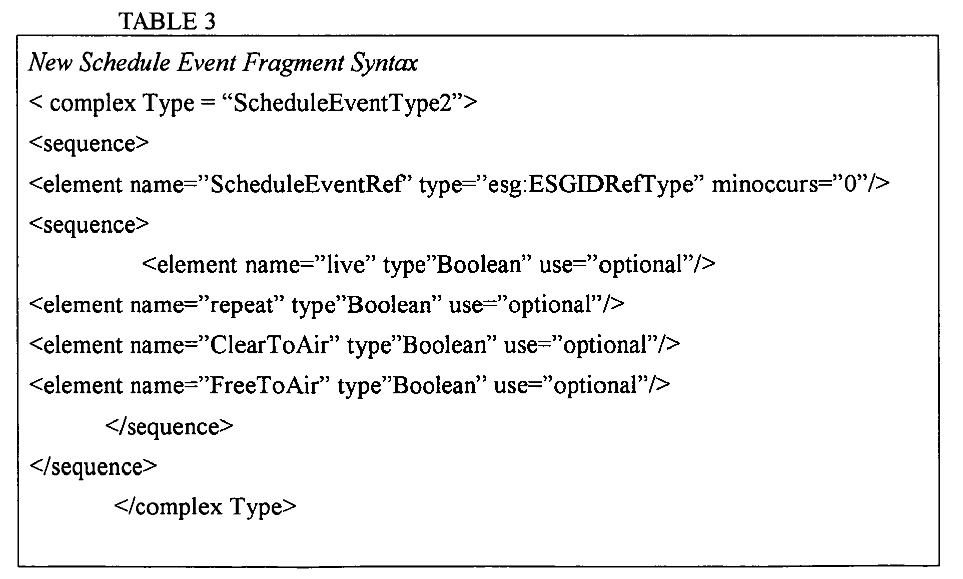

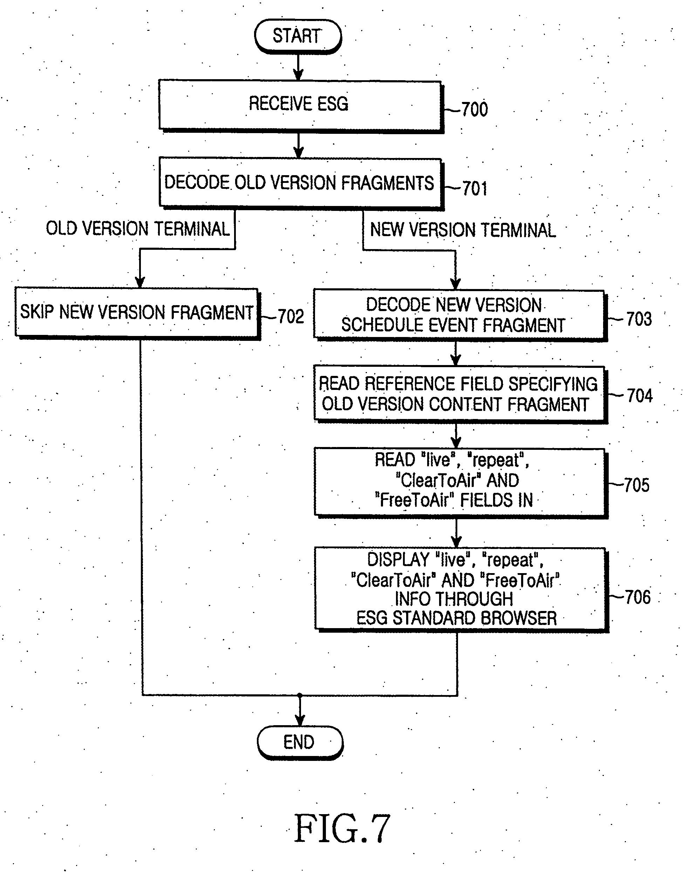

FIG. 7 is a flowchart illustrating a method for reception in accordance with the second case of the present invention.

Referring to FIG. 7, a terminal receives ESG data in step 700 and decodes old fragments among fragments included in the ESG data in step 701. If a decodable fragment list of the terminal does not contain a new fragment, particularly a new schedule event fragment, the terminal is supportable an ESG data standard of an old version and go to step 702. In step 702, the terminal skips the new schedule event fragment included in the received ESG data.

However, if the schedule event fragment of the new version included in the ESG data is contained in the decodable fragment list, the terminal decodes the new schedule event fragment in step 703. In step 704, the terminal reads a reference field for indicating an old content fragment from the new schedule event fragment. In step 705, the terminal decodes "live", "repeat", "ClearToAir" and "FreeToAir" fields contained in the new schedule event fragment. In step 706, the terminal displays the decoded information through an ESG standard browser. At this time, information acquired by decoding referenced old content fragments can be displayed.

In the third case, a field for specifying a pre-paid or post-paid charging type of a specific service is added to the new purchase fragment within the ESG

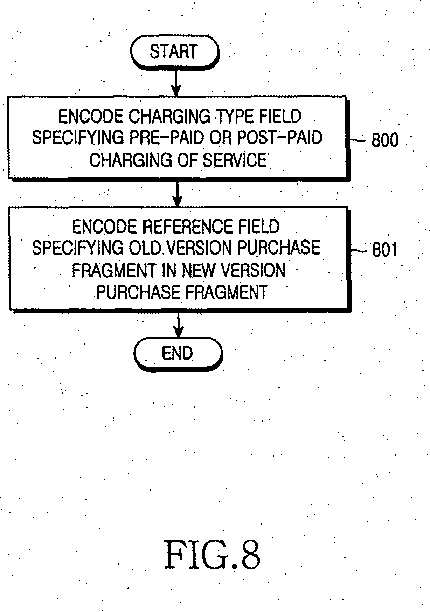

FIG. 8 is a flowchart illustrating the transmission operation in accordance with the third case of the present invention. FIG 8 illustrates detail steps 202 and 203 of FIG. 2..

Referring to FIG. 8, the transmitter adds a "Charging Type" field for specifying the charging type of the specific service or content to the new purchase fragment included in the ESG data through an encoding process in step 800. In step 801, the transmitter inserts a reference field for indicating an old purchase fragment into the new purchase fragment through the encoding process. For example, the "Charging Type" field indicates pre-paid or post-paid charging.

An example of XML syntax of the new purchase fragment is shown in Table 4 below.

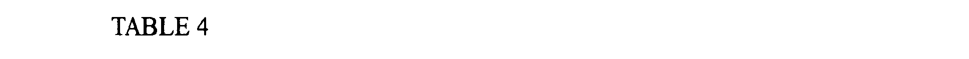

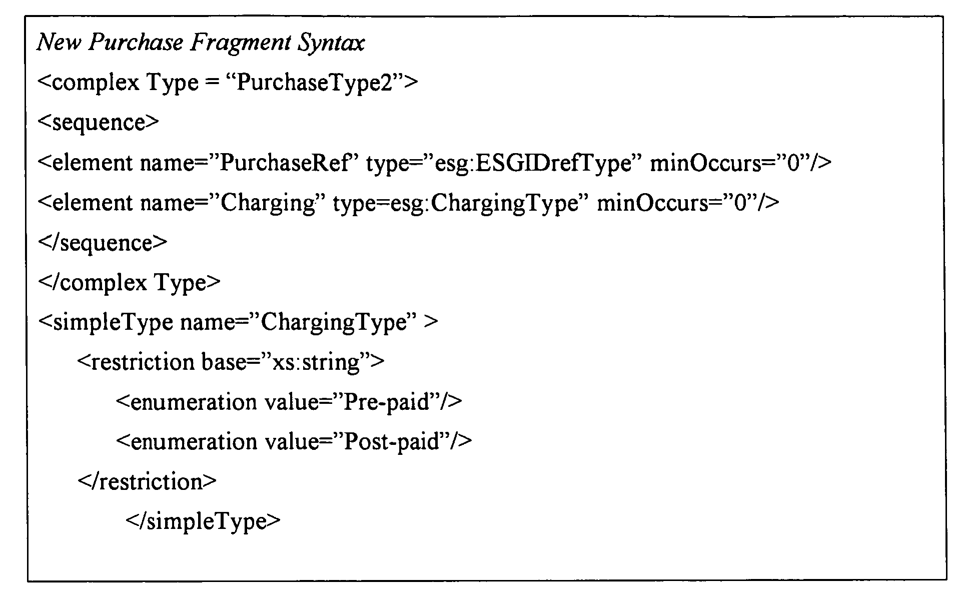

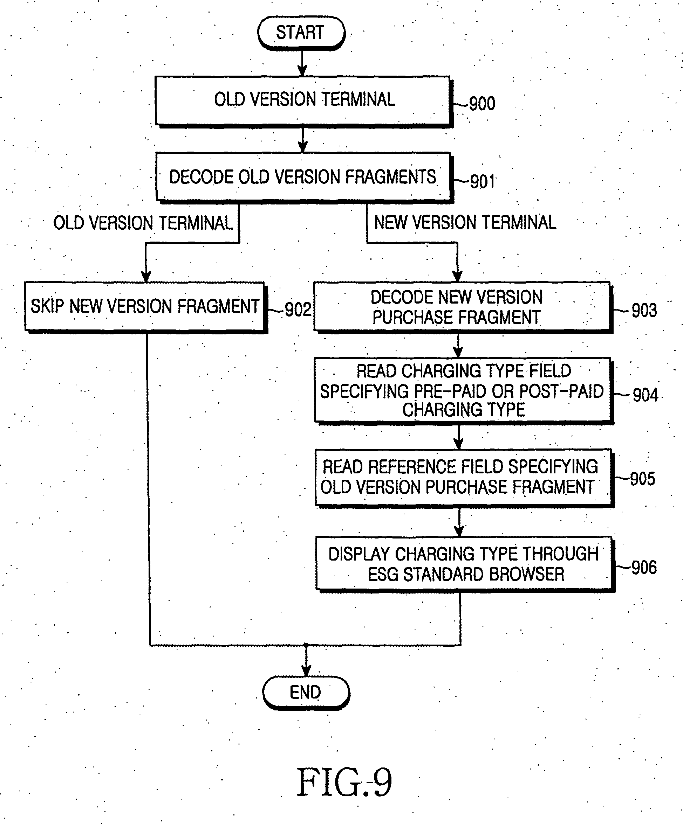

FIG. 9 is a flowchart illustrating a method for reception in accordance with the third case of the present invention.

Referring to FIG. 9, a terminal receives ESG data in step 900 and decodes old fragments among fragments included in the ESG data in step 901. If a decodable fragment list of the terminal does not contain a new fragment, particularly a new purchase fragment, the terminal is supportable an ESG data standard of an old version and go to step 902. In step 902, the terminal skips the new purchase fragment included in the received ESG data.

However, if the new purchase fragment included in the ESG data is contained in the decodable fragment list, the terminal decodes the new purchase fragment in step 903. In step 904, the terminal reads the "Charging Type" field from the new purchase fragment. In step 905, the terminal refers to a reference field contained in the new purchase fragment and reads an old purchase fragment. In step 906, the terminal displays the decoded information through an ESG standard browser. At this time, information acquired by decoding referenced old purchase fragments can be displayed.

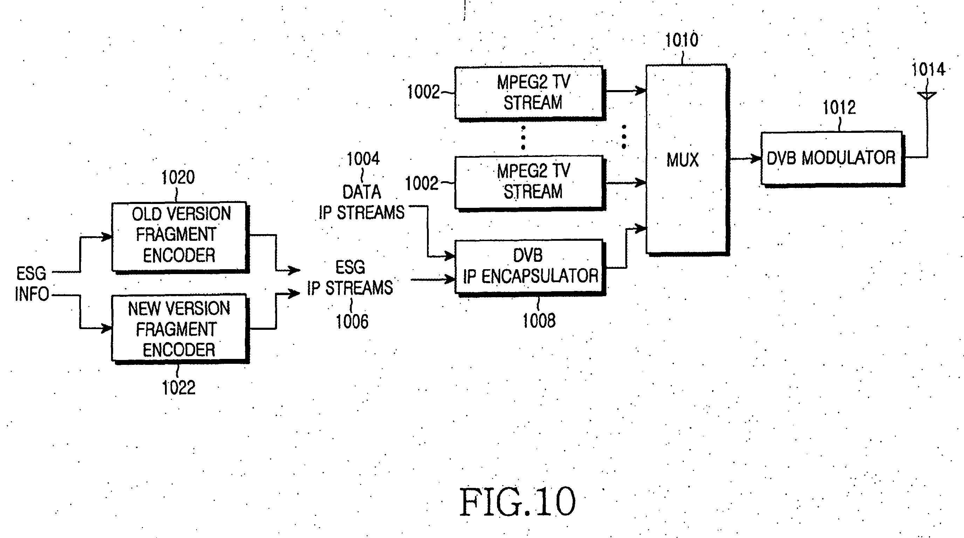

FIG. 10 is a block diagram illustrating the transmitter structure in accordance with the present invention.

Referring to FIG. 10, multiple Moving Pictures Experts Group 2 (MPEG2) streams 1002 corresponding to television (TV) streams are input to a Digital Video Broadcasting (DVB) transmitter 1000. In addition to the TV streams, ESG Internet Protocol (IP) streams 1006 and data IP streams 1004 containing multiple IP streams, i.e., IP-based service data, are input to a DVB IP encapsulator 1008. The ESG IP streams 1006 are constructed in accordance with the present invention. Further, the ESG IP streams 1006 include at least one of a new purchase fragment and a new schedule event fragment when the new purchase fragment contains at least one of a field for specifying price information in a "TOKEN" unit and a field for specifying a service charging type and the new schedule event fragment contains a field for specifying the characteristic of content. The new fragments are encoded in a new (version) fragment encoder 1022, which are different from old fragments encoded in an old (version) fragment encoder 1020.

The DVB IP encapsulator 1008 encapsulates the input IP streams 1004 and 1006 into an MPEG2 Transport Stream (TS). A multiplexer 1010 multiplexes the MPEG2 TS and the MPEG2 TV streams 1002. A DVB modulator 1012 modulates the multiplexed TS into Orthogonal Frequency Division Multiplexing (OFDM) symbols. The OFDM symbols are transmitted through an antenna 1014.

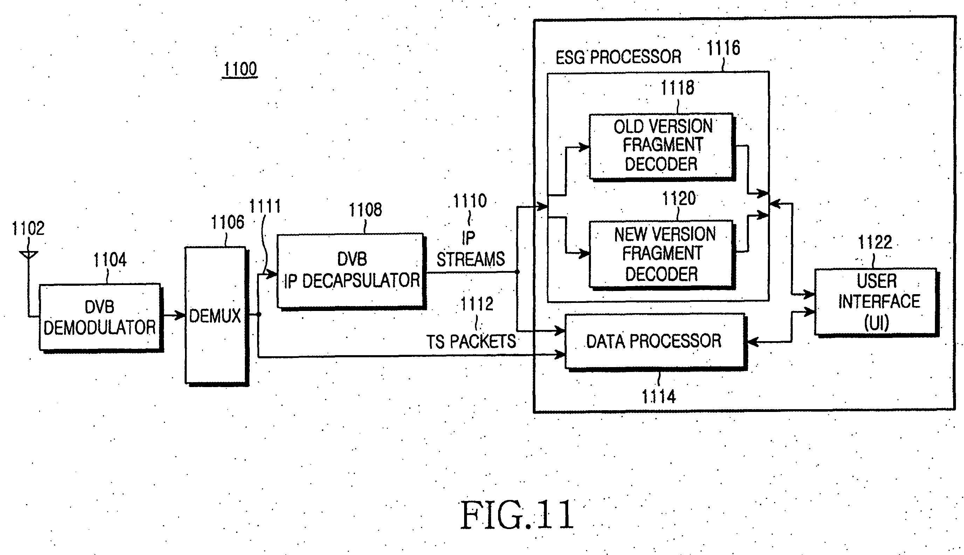

FIG. 11 is a block diagram illustrating the receiver structure in accordance with the present invention.

Referring to FIG. 11, a DVB receiver 1100 receives a signal through an antenna 1102. A DVB demodulator 1104 performs an OFDM demodulation process for the received signal. A demultiplexer 1106 separates data output from the DVB demodulator 1104 into encapsulated IP streams 1111 and MPEG2 TS packet streams 1112. A data processor 1114 performs a series of processes including MPEG decoding for the TS packet streams 1112 such that a user can view an associated service. An IP decapsulator 1108 recovers IP streams 1110 from the encapsulated IP streams 1111. The IP streams 1110 are divided into ESG streams and data streams. The ESG streams are delivered to an ESG processor 1116 and the data streams are delivered to the data processor 1114.

Like the TS packet streams 1112, the data streams are input to the data processor 1114. The ESG streams are input to the ESG processor 1116. The ESG processor 1116 analyzes the ESG streams and acquires ESG data constructed with multiple fragments. The ESG processor 1116 separates the ESG data into old fragments and new fragments on the basis of a preset decodable fragment list. The old and new fragments are decoded in an old (version) fragment decoder 1118 and a new (version) fragment decoder 1120. Detailed structures of the old and new fragments are based on one of the above-described exemplary embodiments or their combination. When a receiving terminal provided with the DVB receiver 1100 does not support an ESG data standard of a new version, the new fragment decoder 1120 is omitted and the new fragments are discarded.

ESG information decoded in the ESG processor 1116 is output through an ESG standard browser of a user interface (UI) 1122 such that the user can recognize the ESG information, or is stored in a memory (not illustrated).

When a new version of ESG information is defined and constructed with new fragments, a digital broadcast transmitter includes unique characteristic values for indicating types of fragments according to ESG data version in the ESG data and signals the unique characteristic values. A terminal has a decodable fragment list including unique characteristic values of decodable fragments in a supportable ESG version. Further, the terminal identifies the decodable fragments from the ESG data by referring to the decodable fragment list and optionally decodes the fragments, thereby reducing or completely eliminating any unnecessary steps.

In the present invention, a unique characteristic value for indicating a type of each fragment is contained in an ESG initialization (Init) container for delivering data structure information required for initialization of ESG data among containers corresponding to a transmission unit of the ESG data.

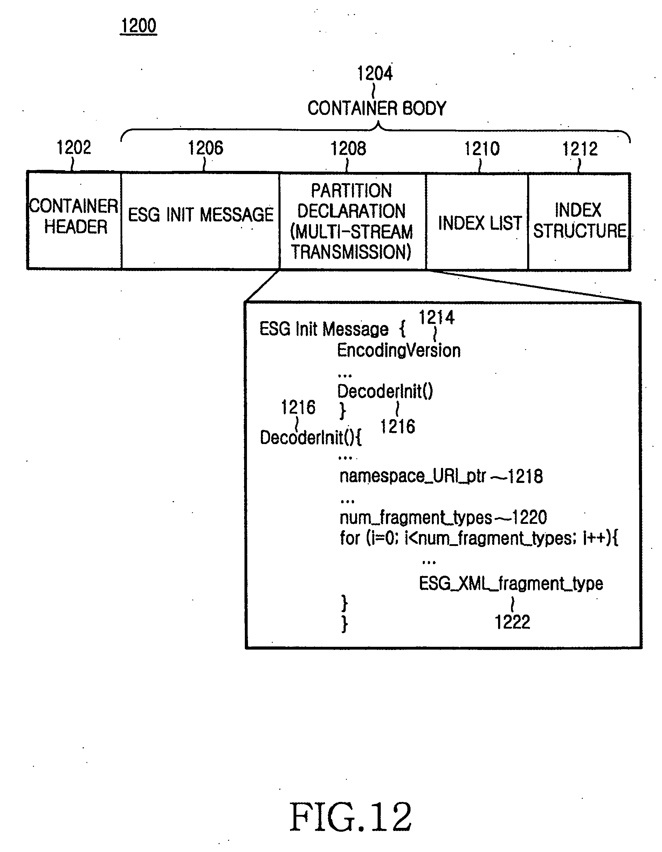

FIG. 12 is a diagram illustrating a structure of an ESG initialization container in accordance with the present invention.

Referring to FIG. 12, an ESG initialization container 1200 is constructed with a container header 1202 and a container body 1204. The container body 1204 contains data to be transmitted in the ESG initialization container 1200. The container header 1202 indicates a characteristic, type, and length of the data to be transmitted in the container body 1204. The container body 1204 is constructed with four fields, i.e., an ESG initialization message field 1206, a partition declaration field 1208, an index list field 1210, and an index structure field 1212. One ESG initialization container 1200 should contain one ESG initialization message field 1206 and optionally contains the index list field 1210 and the index structure field 1212. When an ESG is transmitted in multi-stream mode, the partition declaration field 1208 is optionally contained. The optional fields 1208, 1210, and 1212 are transmitted or not according to the container header 1202.

The ESG initialization message 1206 contains information required to decode the ESG data. In particular, the ESG initialization message 1206 indicates an encoding scheme of the ESG data. For the ESG data, three encoding schemes can be adopted in a DVB system. That is, schemes for transmitting the ESG data in the form of XML, a scheme for compressing the ESG data using GNU™ zip (GZIP) corresponding to an open source compression/decompression program, and a scheme for compressing the ESG data into a binary stream using a Binary Format for MPEG-7 data (BiM) may be used. Information required to decode data differs according to schemes. Thus, in the ESG initialization message 1206, an "EncodingVersion" field 1214 indicates an encoding scheme of the ESG data and a "DecoderInit" field 1216 is constructed on the basis of "EncodingVersion".

The structure of the ESG initialization message 1206 is illustrated in FIG. 12. In FIG. 12, an example of the structure of the ESG initialization message 1206 is used for the first scheme (i.e. case) for transmitting the ESG data in the form of XML without encoding it and the second scheme for compressing the ESG data using the GZIP. Fields for transmitting information other than the "Encoding Version" field 1214 are provided in the initialization message 1206. However, because the other fields are not directly related to the subject matter of the present invention, their illustrations are omitted for the sake of clarity. When a structure of the "DecoderInit" field 1216 is set by the "Encoding Version" field 1214, the "DecoderInit" field 1216 is used to deliver information required to process the ESG data in the terminal. In detail, the "DecoderInit" field 1216 contains namespace_URI_ptr 1218 for specifying a namespace mapped to a set of ESG data, num_fragment_types 1220 for specifying the number of types of ESG fragments to be transmitted in an ESG stream, and ESG_XML_fragment_type 1222 for specifying a type of each ESG fragment.

Further, the namespace_URI_ptr 1218 corresponding to a unique Uniform Resource Identifier (URI) of each system is a pointer to be managed to declare and refer to an XML schema to be used in each system. The namespace_URI_ptr 1218 is necessarily required to interpret the XML schema of ESG data in the terminal. Further, the terminal interprets types of ESG fragments included in an ESG data stream using the "DecoderInit" field 1216. The types of ESG fragments are the types of fragments of an ESG data model. The field 1222 is provided to specify a fragment type in the "DecoderInit" field 1216. For example, in FIG. 12, the name of the field 1222 is "ESG_XML_fragment_type".

Table 5 below shows 16-bit unique characteristic values for specifying fragment types within the "ESG_XML_fragment_type" field 1222.

**TABLE 5**

| Value | ESG_XML_Fragment_Type | XML_Data_Type |
|---|---|---|
| 0x0020 | esg:ESGMain Fragment | esg:ESGMainType |
| 0x0021 | esg:Content Fragment | esg:ContentType |
| 0x0022 | Esg:ScheduleEvent Fragment | esg: ScheduleEventType |
| 0x0023 | esg: Service Fragment | esg:ServiceType |
| 0x0024 | esg: ServiceBundle Fragment | esg: ServiceBundleType |
| 0x0025 | esg:Acquisition fragment | esg:AcquisitionType |
| 0x0026 | esg:Purchase Fragment | esg:PurchaseType |
| 0x0027 | esg:PurchaseChannel Fragment | esg:PurchaseChannelType |

Referring to Table 5, two different field names can be used according to ESG encoding scheme. The "ESG_XML_Fragment_Type" is a field name used to specify a fragment type when XML is used without encoding or GZIP is used in the ESG encoding scheme. The "XML_Data_Type" is a field name used to specify a fragment type when BiM is used in the ESG encoding scheme. Referring to Table 5, it can be seen that unique characteristic values of the fragments are the same as each other even though a field name differs according to ESG encoding scheme.

The fragments declared in Table 5 are fragments of the data model as described with reference to FIG. 1. Referring to Table 5, the fragments have unique characteristic values. The terminal can detect a type of a fragment transmitted in an ESG stream from a unique characteristic value of a received "Fragment Type" field. The unique characteristic values of the fragments of Table 5 are predefined between the terminal and a transmitter.

When new version fragments are added to construct a new version of ESG data other than the fragments of Table 5, additional unique characteristic values predefined between the terminal and the transmitter are set to distinguish the new version fragments from old version fragments.

Table 6 below shows the unique characteristic values set in the new version fragments in accordance with the present invention.

**TABLE 6**

| Value | ESG XML Fragment Type | XML Data Type |
|---|---|---|
| 0x0020 | esg:ESGMain Fragment | esg:ESGMainType |
| 0x0021 | Esg:Content Fragment | esg:ContentType |
| 0x0022 | esg:ScheduleEvent Fragment | esg: ScheduleEventType |
| 0x0023 | Esg:Service Fragment | esg:ServiceType |
| 0x0024 | esg: ServiceBundle Fragment | esg: ServiceBundleType |
| 0x0025 | esg:Acquisition fragment | esg:AcquisitionType |
| 0x0026 | esg:Purchase Fragment | esg:PurchaseType |
| 0x0027 | esg:PurchaseChannel Fragment | esg:PurchaseChannelType |
| 0x0030 | esg:NewVersion Fragment | esg:NewVersionType |
| 0x0031 | Esg:Content Fragment (new version) | esg:ContentType (new version) |
| 0x0032 | esg:ScheduleEvent Fragment (new version) | esg: ScheduleEventType (new version) |
| 0x0033 | Esg: Service Fragment (new version) | esg: ServiceType (new version) |
| 0x0034 | esg: ServiceBundle Fragment (new version) | esg: ServiceBundleType (new version) |
| 0x0035 | esg:Acquisition fragment (new version) | esg:AcquisitionType (new version) |
| 0x0036 | esg:Purchase Fragment (new version) | esg:PurchaseType (new version) |
| 0x0037 | Esg:PurchaseChannel Fragment (new version) | esg:PurchaseChannelType (new version) |

Referring to Table 6, the unique characteristic values of the old version fragments are maintained and the unique characteristic values of the new version fragments are additionally set. Because the value of only a single bit (i.e., a fifth least significant bit) value differs between the unique characteristic values of the old and new version fragments, the new version fragment can be distinguished from the old version fragment by checking only a single bit. Further, when the old version fragment is related to the new version fragment, the unique characteristic value of the new version fragment is generated by changing only the fifth less significant bit value of the unique characteristic value of the associated old version fragment, and indicates the relationship with the associated old version fragment.

The unique characteristic values of Table 6 are also predefined between the terminal and the transmitter. The terminal can determine the unique characteristic values of the new version fragments from Table 6 and can determine versions of fragments included in ESG data using the unique characteristic values of the new version fragments.

Table 6 shows an example in which the fifth least significant bit value is changed from 0 to 1 such that the unique characteristic value of the new version fragment can be easily compared with that of the old version fragment. Of course, in the present invention, positions of bits to be changed and the number of bits to be changed are not limited. That is, predefined bits corresponding to part of the unique characteristic value of the old version fragment can be changed and used for the new version fragment.
When the unique characteristic values of the new version fragments are set as shown in Table 6, the terminal can determine their value in advance. Thus, the terminal receives an ESG initialization container at the beginning of received ESG data, acquires unique characteristic values from a "DecoderInit" field included in an ESG initialization message of the ESG initialization container, reads types of fragments included in the ESG data, and determines whether the fragments are decodable.

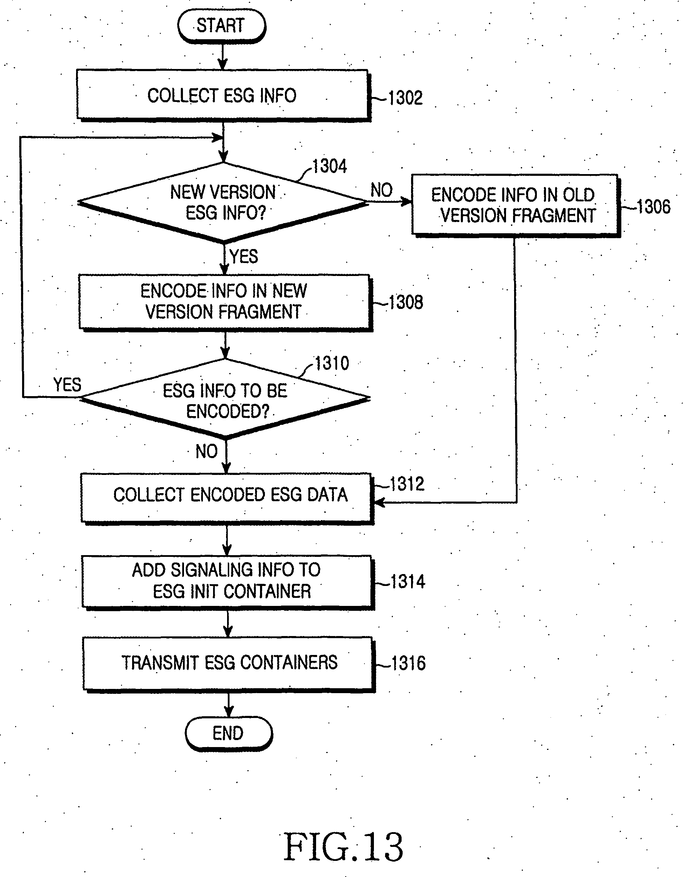

FIG. 13 is a flowchart illustrating an operation of a transmitter in accordance with the present invention.

Referring to FIG. 13, the transmitter collects ESG information to be transmitted in step 1302 and determines whether the collected ESG information conforms to a new version of an ESG standard in step 1304. If the collected ESG information conforms to an old version (rather than the new version), it is inserted into an associated field within an associated old version fragment in which the ESG information can be transmitted in step 1306. If the collected ESG information conforms to the new version standard, it is inserted into an associated field within an associated new version fragment in which the ESG information can be transmitted in step 1308. At this time, the new version fragment further includes a reference field for indicating an associated old version fragment.

In step 1310, the transmitter determines whether there is any more ESG information to be encoded. If there is more ESG information to be encoded, the transmitter returns to step 1304. Otherwise, the transmitter proceeds to step 1312. In step 1312, the transmitter collects all the encoded ESG information (i.e., new version fragments and old version fragments). In step 1314, the transmitter sets signaling information in a "DecoderInit" field contained in an ESG initialization message within an ESG initialization container for indicating a structure of the ESG data, particularly types of the collected fragments. The signaling information includes unique characteristic values of the fragments included in the ESG data. At this time, the unique characteristic values of the new and old version fragments are added as the signaling information. When the signaling information with the unique characteristic values has been added to the ESG initialization message, the transmitter transmits the ESG data with the fragments to a receiver through multiple containers in step 1316.

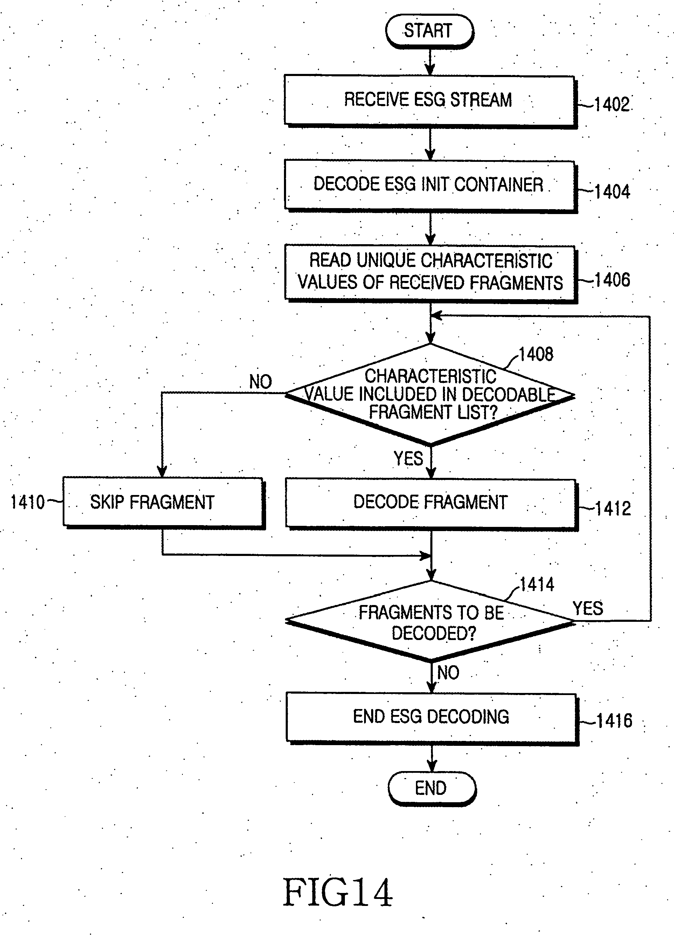

FIG. 14 is a flowchart illustrating an operation of a receiver in accordance with the present invention.

Referring to FIG. 14, a terminal receives ESG data in step 1402. The terminal acquires an ESG initialization message from a first received ESG initialization container in the ESG data and decodes the ESG initialization message in step 1404. The terminal retrieves unique characteristic values for indicating types of fragments included in the ESG data from the ESG initialization message in step 1406. The terminal is provided with a decodable fragment list including unique characteristic values of decodable fragments according to ESG version supportable therein. In step 1408, the terminal determines whether a unique characteristic value of each fragment included in the ESG data is included in the decodable fragment list.

If the unique characteristic value of the fragment is determined to be absent, the terminal proceeds to step 1410 to skip the fragment. However, if the unique characteristic value of the fragment is determined to be present, the terminal proceeds to step 1412 to decode the fragment. At this time, because a terminal for supporting only an old version of ESG data (hereinafter, referred to as an old version terminal) cannot retrieve a unique characteristic value of a new version fragment from its own decodable fragment list, it can decode only old version fragments. On the other hand, because a terminal for supporting a new version of ESG data (hereinafter, referred to as a new version terminal) can retrieve unique characteristic values of all fragments included in the new version of ESG data from its own decodable fragment list, it can decode all the fragments.

In step 1414 after steps 1410 and 1412, the terminal determines whether there are any more fragments to be decoded in the received ESG data. If it is determined that there are more fragments to be decoded, the terminal returns to step 1408. Otherwise, the terminal proceeds to step 1416 to end the decoding of the ESG data.

In the method as described with reference to FIG. 14, a determination can be made as to whether fragments are decodable by reading only unique characteristic values of the received fragments regardless of an old or new version terminal.

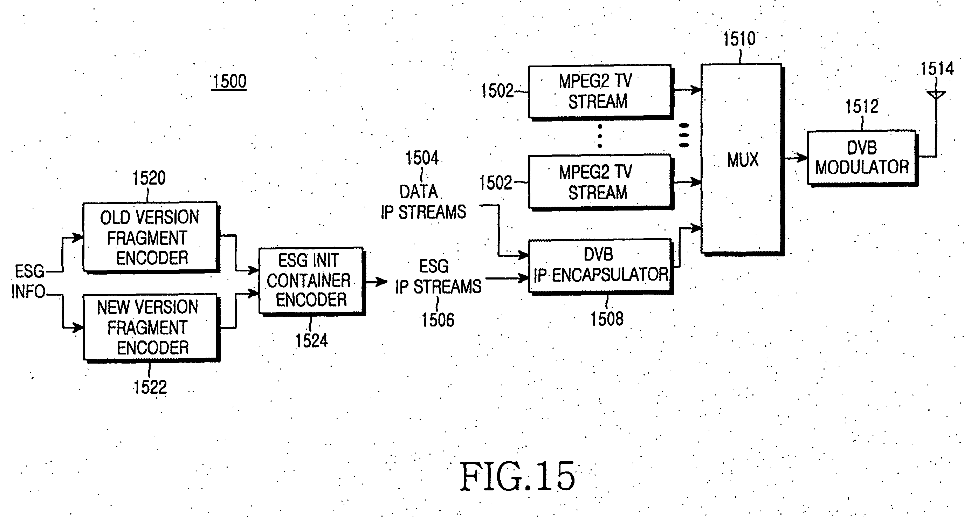

FIG. 15 is a block diagram illustrating a structure of a transmitter for transmitting ESG data with signaling information in accordance with the present invention.

Referring to FIG. 15, multiple MPEG2 streams 1502 corresponding to TV streams are input to a DVB transmitter 1500. In addition to the TV streams, IP streams, i.e., data IP streams 1504 for transmitting IP based service data and ESG IP streams 1506 for transmitting ESG data, are input to a DVB IP encapsulator 1508. The ESG IP streams 1506 are constructed with old version fragments encoded in an old version fragment encoder 1520 and new version fragments encoded in a new version fragment encoder 1522. That is, a new version of information is encoded as the new version fragments different from the old version fragments. The encoded ESG fragments form ESG containers.

To construct an ESG initialization container to be first transmitted in the ESG IP streams, an ESG initialization container encoder 1524 determines types of the fragments encoded in the ESG encoders 1520 and 1522 and sets unique characteristic values mapped to the ESG fragment types in a "DecoderInit" field contained in an ESG initialization message of the ESG initialization container. If all the ESG fragments are old version fragments, only unique characteristic values of the old version fragments are contained in the "DecoderInit" field. If the ESG fragments further include new version fragments, unique characteristic values of the new version fragments are further contained in the "DecoderInit" field. One ESG initialization container containing unique characteristic values of the fragments and multiple ESG containers containing the ESG fragments are input to the DVB IP encapsulator 1508 in the form of the ESG IP streams 1506.

The DVB IP encapsulator 1508 encapsulates the input IP streams 1504 and 1506 into an MPEG2 TS. A multiplexer 1510 multiplexes the MPEG2 TS received from the DVB IP ENCAPSULATOR 1508 and the MPEG2 TV streams 1502. A DVB modulator 1512 modulates the multiplexed MPEG2 TS into OFDM symbols. The OFDM symbols are transmitted through an antenna 1514 via a DVB modulator 1512.

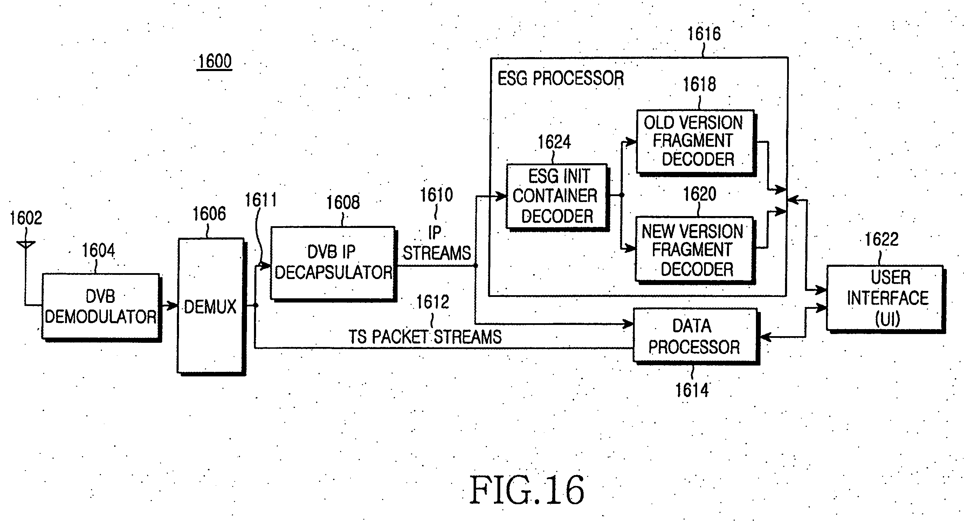

FIG. 16 is a block diagram illustrating a structure of a receiver for receiving ESG data with signaling information in accordance with the present invention.

Referring to FIG. 16, a DVB receiver 1600 receives a signal through an antenna 1602. A DVB demodulator 1604 performs an OFDM demodulation process for the received signal. A demultiplexer 1606 separates data output from the DVB demodulator 1604 into encapsulated IP streams and MPEG2 TS packet streams 1612. A data processor 1614 performs a series of processes including MPEG decoding for the TS packet streams 1612 such that a user can view an associated service. An IP decapsulator 1608 recovers IP streams 1610 from the encapsulated IP streams. The IP streams 1610 are divided into ESG streams and data streams. The ESG streams are delivered to an ESG processor 1616 and the data streams are delivered to the data processor 1614.

Similarly to the TS packet streams 1612, the data streams are input to the data processor 1614. The ESG streams are input to the ESG processor 1616. The ESG processor 1616 analyzes the ESG streams and acquires ESG data constructed with multiple fragments. The ESG processor 1616 separates the ESG data into old fragments and new fragments on the basis of a preset decodable fragment list, and decodes the old and new fragments. In the ESG processor 1616, an ESG initialization container decoder 1624 decodes signaling information contained in an ESG initialization message of a first received ESG initialization container of the ESG data, determines types and versions of the fragments using unique characteristic values of a "DecoderInit" field for fragments included in the ESG data, and determines whether the fragments are decodable.

In detail, the ESG processor 1616 compares its own decodable fragment list with initial characteristic values set in the "DecoderInit" field within the ESG initialization message contained in the ESG initialization container. The ESG processor 1616 divides the ESG data into the old version fragments and the new version fragments. The old and new version fragments are decoded in an old version fragment decoder 1618 and a new version fragment decoder 1620. The terminal based on the new version as illustrated in FIG. 16 can decode all the old and new version fragments. However, when a terminal does not support the new version of an ESG data standard, the new version fragment decoder 1620 is not provided in the ESG processor 1616 and the new fragments are discarded.

ESG information decoded in the ESG processor 1616 is output through an ESG standard browser of a UI 1622 such that the user can recognize the ESG information, or is stored in a memory (not illustrated).

When new information is to be added to ESG data constructed by fragments of an old version with the mutual reference relationship, the new information is inserted into a new fragment through an encoding process and the relationship with an old version fragment is specified in the new fragment. Terminals capable of recognizing old version ESG data as well as terminals capable of recognizing new version ESG data can effectively decode the ESG data without error.

Although the exemplary embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims, along with their full scope of equivalents.

## Claims

1. A method for transmitting Electronic Service Guides (ESGs) of different versions in a digital broadcasting system, comprising the steps of:
receiving new information to be added to ESG data of an old version comprising at least one of a service fragment, a schedule event fragment, a content fragment, an acquisition fragment, a service bundle fragment, a purchase fragment, and a purchase channel fragment corresponding to old version fragments;
encoding the new information and inserting the encoded new information into a new version fragment distinguished from the old version fragments;
inserting a reference field for indicating an old version fragment corresponding to the new information into the new version fragment; and
transmitting ESG data of a new version comprising the new version fragment and the old version fragments to receiving terminals through multiple Internet Protocol (IP) streams.

2. The method of claim 1, wherein the new version ESG data further comprises:
a new version purchase fragment comprising a field for setting a price unit of a broadcast service or broadcast content, the new version purchase fragment further comprising:
a reference field for indicating the old version purchase fragment.

3. The method of claim 1, wherein the new version ESG data further comprises:
a new version schedule event fragment comprising at least one of "live", "repeat", "ClearToAir", and "FreeToAir" fields for indicating characteristics of broadcast content, the new version schedule event fragment further comprising:
a reference field for indicating the old version content fragment.

4. The method of claim 1, wherein the new version ESG data further comprises:
a new version purchase fragment comprising a field for indicating a charging type of a broadcast service, the new version purchase fragment further comprising:
a reference field for indicating the old version purchase fragment.

5. The method of claim 1, wherein the receiving terminals comprise:
old version receiving terminals for decoding the old version ESG data; and
new version receiving terminals for decoding the new version ESG data.

6. The method of claim 1, further comprising:
inserting signaling information for indicating the old and new version fragments into an ESG initialization message within an ESG initialization container for indicating a structure of the ESG data; and
inserting the ESG data in the ESG initialization container and transmitting the ESG initialization container with the ESG data to the terminals.

7. The method of claim 6, wherein the ESG initialization message further comprises:
an encoding version field for indicating a scheme in which the ESG data is encoded; and
a decoder initialization field comprising unique characteristic values for indicating types and versions of the fragments.

8. The method of claim 7, wherein unique characteristic values of new version fragments are set to have a single bit which differs from those of associated old version fragments and a plurality of bits which are the same as those of the associated old version fragments.

9. The method of claim 7, wherein unique characteristic values of new version fragments are set to have the same predefined bits as those of associated old version fragments.

10. A method for receiving Electronic Service Guides (ESGs) of different versions in a digital broadcasting system, comprising the steps of:
receiving ESG data comprising at least one of a service fragment, a schedule event fragment, a content fragment, an acquisition fragment, a service bundle fragment, a purchase fragment, and a purchase channel fragment corresponding to old version fragments and at least one new version fragment;
dividing the ESG data into the old version fragments and the at least one new version fragment;
decoding the old version fragments;
determining whether the at least one new version fragment can be decoded by referring to a decodable fragment list; and
decoding the at least one new version fragment only when it is determined that the at least one new version fragment can be decoded.

11. The method of claim 10, wherein the ESG data further comprises:
a new version purchase fragment comprising a field for setting a price unit of a broadcast service or broadcast content, the new version purchase fragment further comprising:
a reference field for indicating the old version purchase fragment.

12. The method of claim 10, wherein the ESG data further comprises:
a new version schedule event fragment comprising at least one of "live", "repeat", "ClearToAir", and "FreeToAir" fields for indicating characteristics of broadcast content, the new version schedule event fragment further comprising:
a reference field for indicating the old version content fragment.

13. The method of claim 10, wherein the ESG data further comprises:
a new version purchase fragment comprising a field for indicating a charging type of a broadcast service, the new version purchase fragment further comprising:
a reference field for indicating the old version purchase fragment.

14. The method of claim 10, wherein the determining step comprises:
acquiring signaling information for indicating types of fragments from an ESG initialization message within an ESG initialization container for indicating a structure of the ESG data; and
identifying decodable fragments from the fragments using the signaling information and the decodable fragment list.

15. The method of claim 14, wherein the ESG initialization message comprises:
an encoding version field for indicating a scheme with which the ESG data was encoded; and
a decoder initialization field comprising unique characteristic values for indicating types and versions of the fragments.

16. The method of claim 15, wherein unique characteristic values of the at least one new version fragment are set to have a single bit which differs from those of associated old version fragments and a plurality of bits which are the same as those of the associated old version fragments, respectively.

17. The method of claim 16, wherein the unique characteristic values of the at least one new version fragment are set to have the same predefined bits as those of the associated old version fragments.

18. The method of claim 14, wherein the determining step comprises the steps of:
determining whether unique characteristic values of the fragments are contained in the decodable fragment list; and
determining that fragments with unique characteristic values comprised in the decodable fragment list can be decoded.

19. An apparatus for transmitting Electronic Service Guides (ESGs) of different versions in a digital broadcasting system, comprising:
an old version fragment encoder for generating ESG data of an old version comprising at least one of a service fragment, a schedule event fragment, a content fragment, an acquisition fragment, a service bundle fragment, a purchase fragment, and a purchase channel fragment corresponding to old version fragments;
a new version fragment encoder for receiving new information to be added to the old version ESG data, encoding the new information, inserting the encoded new information into a new version fragment distinguished from the old version fragments, and inserting a reference field for indicating an old version fragment related to the new information into the new version fragment; and
a transmitter for transmitting ESG data of the new version comprising the new version fragment and the old version fragments to receiving terminals through multiple Internet Protocol (IP) streams.

20. The apparatus of claim 19, wherein the new version ESG data further comprises:
a new version purchase fragment comprising a field for setting a price unit of a broadcast service or broadcast content, the new version purchase fragment further comprising:
a reference field for indicating the old version purchase fragment.

21. The apparatus of claim 19, wherein the new version ESG data further comprises:
a new version schedule event fragment comprising at least one of "live", "repeat", "ClearToAir", and "FreeToAir" fields for indicating characteristics of broadcast content, the new version schedule event fragment further comprising:
a reference field for indicating the old version content fragment.

22. The apparatus of claim 19, wherein the new version ESG data further comprises:
a new version purchase fragment comprising a field for indicating a charging type of a broadcast service, the new version purchase fragment further comprising:
a reference field for indicating the old version purchase fragment.

23. The apparatus of claim 19, wherein the receiving terminals comprise:
old version receiving terminals for decoding the old version ESG data; and
new version receiving terminals for decoding the new version ESG data.

24. The apparatus of claim 19, further comprising:
an ESG initialization container encoder for inserting signaling information for indicating the old and new version fragments into an ESG initialization message within an ESG initialization container for indicating a structure of the ESG data, inserting the ESG data in the ESG initialization container, and transmitting the ESG initialization container with the ESG data to the terminals.

25. The apparatus of claim 24, wherein the ESG initialization message further comprises:
an encoding version field for indicating a scheme in which the ESG data is encoded; and
a decoder initialization field comprising unique characteristic values for indicating types and versions of the fragments.

26. The apparatus of claim 25, wherein unique characteristic values of new version fragments are set to have a single bit which differs from those of associated old version fragments and a plurality of bits which are the same as those of the associated old version fragments.

27. The apparatus of claim 26, wherein the unique characteristic values of the new version fragments are set to have the same predefined bits as those of the associated old version fragments.

28. An apparatus for receiving Electronic Service Guides (ESGs) of different versions in a digital broadcasting system, comprising:
a receiver for receiving ESG data comprising at least one of a service fragment, a schedule event fragment, a content fragment, an acquisition fragment, a service bundle fragment, a purchase fragment, and a purchase channel fragment corresponding to old version fragments and at least one new version fragment;
an old version fragment decoder for decoding the old version fragments of the ESG data; and
a new version fragment decoder for determining whether the at least one new version fragment can be decoded by referring to a preset decodable fragment list, and decoding the at least one new version fragment when it is determined that the at least one new version fragment can be decoded.

29. The apparatus of claim 28, wherein the ESG data further comprises:
a new version purchase fragment comprising a field for setting a price unit of a broadcast service or broadcast content, the new version purchase fragment further comprising:
a reference field for indicating the old version purchase fragment.

30. The apparatus of claim 28, wherein the ESG data further comprises:
a new version schedule event fragment comprising at least one of "live", "repeat", "ClearToAir", and "FreeToAir" fields for indicating characteristics of broadcast content, the new version schedule event fragment further comprising:
a reference field for indicating the old version content fragment.

31. The apparatus of claim 28, wherein the ESG data further comprises:
a new version purchase fragment comprising a field for indicating a charging type of a broadcast service, the new version purchase fragment further comprising:
a reference field for indicating the old version purchase fragment.

32. The apparatus of claim 28, further comprising:
an ESG initialization container decoder for acquiring signaling information for indicating types of fragments from an ESG initialization message within an ESG initialization container for indicating a structure of the ESG data and identifying decodable fragments from the fragments using the signaling information and the decodable fragment list.

33. The apparatus of claim 32, wherein the ESG initialization message comprises:
an encoding version field for indicating a scheme in which the ESG data is encoded; and
a decoder initialization field comprising unique characteristic values for indicating types and versions of the fragments.

34. The apparatus of claim 33, wherein unique characteristic values of the at least one new version fragment are set to have a single bit which differs from those of associated old version fragments and a plurality of bits which are the same as those of the associated old version fragments.

35. The apparatus of claim 34, wherein the unique characteristic values of the at least one new version fragment are set to have the same predefined bits as those of the associated old version fragments.

36. The apparatus of claim 32, wherein the new version fragment decoder determines that fragments having unique characteristic values contained in the decodable fragment list can be decoded.
